# EUROPEAN PATENT APPLICATION

(11) **EP 4 550 191 A1**
(43) Date of publication of application: **07.05.2025**
(21) Application number: 23206893.2
(22) Date of filing: 31.10.2023
(51) Int. Cl.: G06F 21/62

(54) **PRIVACY PRESERVING COMMUNICATION THROUGH MEMORY TRIGGERS**

(71) Applicant: HONDA MOTOR CO., LTD., Minato-ku Tokyo 107-8556 (JP)
(72) Inventor: Weißwange, Thomas, 63073 Offenbach/Main (DE); Schmüdderich, Jens, 63073 Offenbach/Main (DE); Dietrich, Manuel, 63073 Offenbach/Main (DE)
(74) Representative: Beder, Jens

(57) **Abstract**

A computer implemented method and system for assisting a user for recall of information in situations that may not be sufficiently private for explicit disclosure of said information. The method comprises recording S100 target user information and at least one associated context feature, and storing S200 the target user information and associated therewith the at least one associated context feature, wherein, when recall of the target user information is required in an information recall situation S300, the target user information or the at least one associated context feature is communicated S500, depending on whether the information recall situation is or is not sufficiently private for explicit communication of the target user information S400.

## Description

The present disclosure relates to a computer implemented method and system for assisting a user in recall of information in situations that may not be sufficiently private for explicit disclosure of said information.

Autonomous devices such as smartphones, assistive robots, and smart home device constellations are often employed in the service of reminding users of information ranging from important events and appointments to simple daily tasks. This service extends, in some cases, to recall assistance, which does not necessarily relay the explicit or complete information associated with the desired information-to-be-recalled. It is known that human memory recall may be triggered, improved, and/or supported when context features relevant to the memory are communicated to the user in the form of memory triggers. These memory triggers often are found in the environment of the situation in which the memory is formed, but they may also be non-present but still relevant context features, or even fictional creations that are associable with the information-to-be-memorized.

It is often the case that reminders are scheduled at times in which a user is not in a situation that could be considered private for such information to be explicitly disclosed. The lack of privacy is an especially important consideration in cases where the user relies on an assistive interface that uses, for example, speech or highly visible text in the aforementioned reminders.

Indicating one extreme of the range of possible memory triggers and the general concept of recall assistance, US 2022/0139200 A1 lays out a specific type of trigger for reminding a user to perform certain tasks, the trigger being, in this case, a relevant behavior performed by a robot assistant. The broadness of the range of memory triggers tends to result in focusing on a small cluster of types or even a single type of trigger or context feature. This focus results in highly specialized systems and methods, but also means that the applicability of the resulting inventions is confined to narrow fields. In the field of privacy preservation, US 11 494 502 B2 discloses a method for determining the privacy level of an environment and communicating information that has been redacted accordingly. While the privacy of the environment is taken into account, redacted information may not be as suitable for memory recall as a memory trigger, which is further exacerbated by the possibility that the channels for communicating such information may not be available or suitable for some situations.

As discussed hereinabove, present technology does not provide a broad, multi-faceted approach to memory recall assistance in situations where privacy is a concern, relying instead on very specific methods that do not extrapolate well into the range of possible situations or range of possible technologies.

It is thus an object of the present invention to provide a method for memory recall assistance that is both directed towards privacy, and is highly flexible in terms of the devices to which it may be applied.

The present invention provides a computer implemented method and system for assisting a user for recall of information in situations that may not be sufficiently private for explicit disclosure of said information.
(1) According to a first aspect of the invention, a computer implemented method for assisting a user in recalling target user information comprises a plurality of steps. First, recording target user information and at least one associated context feature. Second, following the recording, storing the target user information and associated therewith the at least one associated context feature. When recall of the target user information is required in an information recall situation, the target user information or the at least one associated context feature is communicated, depending on whether the information recall situation is or is not sufficiently private for explicit communication of the target user information.

The above aspect provides not only to assist in recalling of target user information, but it also performs this assistance in a different way depending on the privacy of the information recall situation. Furthermore, because the at least one associated context feature is not limited to a certain kind of stimulus, the recording step may collect any number of stimuli (context features) that may be used in recall assistance, so that even situations in which a visual stimulus is not usable, an auditory stimulus may take its place.

(2) In the first aspect (1), the at least one associated context feature may comprise one of a plurality of different types of stimuli. Optionally a context feature may be a gesture, gaze, or facial expression which has been determined to be relevant to the information recall situation and/or the target user information. Optionally a person or object which the user has been determined to pay attention to during the information recall situation may be recorded as an associated context feature. Optionally a story related to the target user information may be used.

The plurality of possible stimuli above not only act as context features that may be used in memory recall assistance, but are also interchangeable with one another in such a way that it is possible that, when one is not usable, another may be advantageous depending on the situation.

(3) In the first aspect (1) and optionally the above (2), one of the at least one associated context feature may be recorded from an initial situation corresponding to the time at which the target user information.

Because it is very likely that an object or happening during the initial communication of the target user information can become associated with the memory, recording at least one of these as an associated context feature increases the chances that a feature that successfully assists in memory recall will be available for a recall situation.

(4) In the first aspect (1) and optionally the above (2) or (3), the sufficiency of the privacy of the information recall situation may be calculated via first determining a first privacy level of the target user information based on a classification type of the target user information, and second determining a second privacy level of the information recall situation. A discrepancy between the first privacy level and the second privacy level is then used to determine whether the information recall situation is or is not sufficiently private, and thus whether the target user information or the at least one associated context feature is communicated.

Determining whether a situation is sufficiently private allows for the information to not always be omitted in favor of a context feature, since even a highly effective memory trigger may have a failure rate in memory recall. Failure in recall assistance is an acceptable risk in the protection of private information, but it is not necessary to risk said failure if the information recall situation can be assessed to be sufficiently private.

(5) In the first aspect (1) and optionally the above (2) to (4), an effectiveness of the at least one associated context feature as a memory aid for triggering recall of target user information by the user may be determined.

Determining the effectiveness of context features as memory aids helps classify which would be best communicated in a recall assistance situation. Because multiple context features may be recorded, it is a clear advantage when an effectiveness may be associated with them.

(6) In the first aspect (1) and following the above (5), the effectiveness of context features as memory aids may further be used in determining one of the at least one associated context feature to be a memory trigger. The memory trigger may then be communicated during assistance of recall of the target user information if an insufficiently private information recall situation is determined to be present.

It is advantageous to further specify from context features into memory triggers to streamline and improve the process of memory recall assistance, especially in cases when machine learning may be employed in iteratively improving the effectiveness of such memory triggers. When it can be determined that some classifications of context features work better as memory triggers than others for a user, a machine executing the method at hand can utilize fewer resources in determining which features will be effective due to precedent.

(7) In the first aspect (1) and following the above (4), the at least one associated context feature may be stored as at least one of a plurality of context features in a context feature database. Similarly, the target user information may be stored as one of a plurality of instances of target user information in a target user information database.

Storage of context features and target user information in a database allows for context features and target user information to be retained. Creating databases provides an opportunity for, for example, context features to be analyzed and associated with target user information that they were not initially associated with, in a way that a rigidly produced array would not so readily enable.

(8) In the first aspect (1) and following the above (7), an effectiveness of at least one of the plurality of context features in the context feature database as a memory aid for triggering recall of one or multiple of the plurality of instances of target user information in the target user information database may be determined. Furthermore, the at least one of the plurality of context features in the context feature database may be determined to be a memory trigger based on the effectiveness. The memory trigger may then be communicated during assistance of recall of one or multiple of the plurality of instances of target user information in the target user information database other than the target user information originally associated with the context feature if an insufficiently private information recall situation is determined to be present.

Beyond sharing the already recited advantages of (5) and (6) above, the availability of context features from the context feature database as potential memory triggers allows for a wider range of situations to be covered, especially situations in which context features initially associated with respective target user information may not be determined to be ideal for triggering memory recall. For example, if a context feature of a pill bottle opening sound relating to the target user information of a heart medicine uptake reminder is present in the context feature database, and such a sound is not recorded for a similar target user information of a collagen supplement, that context feature may be additionally applied to assist the user in remembering to take the collagen supplement.

(9) In the first aspect (1) and following the above (6) or (8), it may be communicated to the user that the memory trigger has been associated with the target user information and will be communicated if an insufficiently private information recall situation is determined to be present.

Communicating such information to the user can serve to strengthen their mental connection between the memory trigger and the target user information, and help avoid confusion if that memory trigger is communicated in place of the target user information. This is especially helpful in situations where the memory trigger is taken from the context feature database; because the user may not be familiar with that memory trigger being used in the new contextualization of the presently discussed target user information.

(10) According to a second aspect of the invention, a system for facilitating assisting a user in recalling target user information comprises a constellation of means for the execution thereof. First, a determining means for decision-making regarding target user information, associated context features, and situations relevant thereto. Second, a recording means for recording target user information and associated context features. Third, a storing means for storing target user information and associated context features. Fourth, a communication means for communicating with the user. The recording means records target user information and at least one associated context feature, and the target user information and the at least one associated context feature are stored via the storing means. In the storing means, the at least one associated context feature is associated with the target user information. When a situation is determined by the determining means to be an information recall situation, wherein recall of the target user information is required, the determining means determines whether the information recall situation is or is not sufficiently private for explicit communication of the target user information, and the communication means communicates the target user information or the at least one associated context feature to the user.

The system for executing the method of the first aspect carries the advantages thereof, but it further provides that the means do not need to be a part of a single device. The constellation of means could easily be distributed in a smart home, or otherwise among several devices connected to the cloud.

(11) In the second aspect (10), a sensing means may be provided for detecting stimuli regarding target user information, associated context features, and situations relevant thereto. With the provided sensing means, the determining means determines a first privacy level of the target user information based on a classification type of the target user information, and determines a second privacy level of the information recall situation based on environmental factors sensed by the sensing means. A discrepancy between the first privacy level and the second privacy level may then be used by the determining means to determine whether the information recall situation is or is not sufficiently private, and thus whether the target user information or the at least one associated context feature is to be communicated by the communicating means.

Beyond sharing the already recited advantages wrought by the method of (4), providing that the environment of the recall situation is sensed by a sensing means allows for opportunities such as facial recognition, voice recognition, or simple recognition of the surroundings (i.e. the user's home, an open-air park, etc.). The sensing means being flexible in interpretation allows it to apply to many types of devices that may exist in a constellation provided in the second aspect.

Further details and aspects of the invention will now be explained with respect to embodiments illustrated in the attached drawings, in which
- Fig. 1: shows a block diagram of the stepwise progression of an embodiment of the method of the present invention.
- Fig. 2: shows a block diagram of a stepwise progression of an embodiment of the method of the present invention.
- Fig. 3: shows a block diagram of a stepwise progression of an embodiment of the method of the present invention.
- Fig. 4: shows a block diagram of a stepwise progression of an embodiment of the method of the present invention.
- Fig. 5: shows a simplified diagram of the system associated with the method of the present invention. The determining means 1 is shown in a glass-box fashion showing software architecture that would be expected in a preferred embodiment.
- Fig. 6: shows a block diagram of a stepwise progression of an embodiment of the method and system of the present invention in a theoretical implementation.
- Fig. 7: shows a block diagram of a stepwise progression of an embodiment of the method and system of the present invention in a theoretical implementation.
- Fig. 8: shows a block diagram of a stepwise progression of an embodiment of the method and system of the present invention in a theoretical implementation.
- Fig. 9: shows a block diagram of a stepwise progression of an embodiment of the method and system of the present invention in a theoretical implementation.

Specific terms are used in the figures, which are shortly described below for clarity.

Recall, in the context of the present invention, refers to the act of a human remembering information.

Target user information, in the context of the present invention, is any information deemed relevant for memorization by a user. This information may be directly requested by the user or another operator (e.g. a doctor or assistant) to be recorded for recall assistance later. Examples of target user information may include appointment dates and associated details, a daily task of taking medication, a person's name, or a combination to a lock.

Context features, in the context of the present invention, may comprise any number of stimuli that can be related to a target user information. Context features make up a broad class of information that could help a user remember target user information, ranging from things like a picture or sound observed during the initial receipt of target user information, stimuli recorded in a similar context as the target user information, or even fabricated information that may be presented to the user in order to provide an artificial stimulus as a memory trigger that may be repeated for later recall assistance.

Situations, in the context of the present invention, are environments and times relevant to target user information recording or recall assistance. An environment may be dynamic, thus further specifying a time aspect, i.e. situation, prevents confusion in cases wherein the same environment is present for information recording and recall assistance thereof.

Privacy level, in the context of the present invention, is (A) a value that may be estimated for a piece of information (analysis may be applied to both context features and target user information) based on a number of factors such as sensitivity (such as a highly personal or medical subject) and predetermined or detected confidentiality (such as information clearly marked as confidential, or a user or speaker stating the information as such); and (B) a value that may be estimated for an environment using known tools such as voice or face recognition and environmental analysis of factors such as open doors, unfamiliar locations, or high noise levels. The discrepancy in privacy levels represents what is known colloquially as disclosure risk, with the privacy level of information itself being classified into ranges of disclosure risk potential. The term "privacy" is used in terms of sufficiency in the claims, this is referring to the acceptability of the disclosure risk, which may be determined via artificial intelligence or directly set by a user or operator.

A memory aid, in the context of the present invention, is a piece of information that may aid in recall of target user information.

A memory trigger, in the context of the present invention, is a context feature which has been determined, through a number of different possible estimation methods, to be a favorable choice for acting as a memory aid in recall of target user information. Especially in the case of a plurality of associated context features being present, establishing which will be used as a memory trigger through premeditated estimations can help prevent failures in recall assistance.

### <First Embodiment>

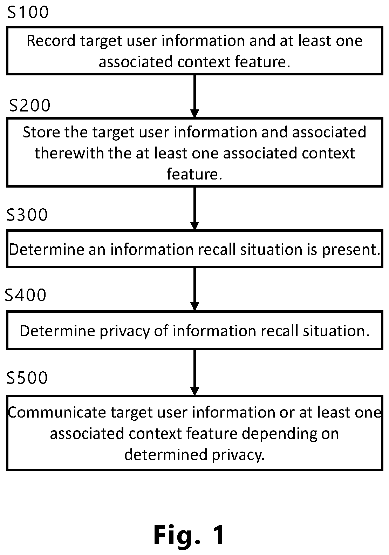

The embodiment shown in Fig. 1 provides a broad overview of the sequence of method steps associated with the computer implemented method for assisting a user in recalling target user information.

The first step S100 of recording target user information and associated context feature(s) may take place at any time when at least the target user information or an associated context feature may be present, such as discussions or events related to the target information. The recording step S100 may therefore take place over an extended period of time for the purpose of gathering further associated context features. Information gathered in the recording step S100 may comprise, for example, a speech-to-text recording of a doctor's appointment being made (the target user information) and an image of a painting present in the situation (the context feature). It is implied that this step is performed with some type of trigger event, which could range from sensing the environment to automatically activating during a scheduled meeting.

The second step S200 of storing the target user information and associated therewith at least one associated context feature may, for example, be done in a tabulated form wherein the target user information and the at least one associated context feature share an index. Data structures beyond arrays are not excluded as a possibility in this embodiment.

The third step S300 of determining if an information recall situation is present may be done in a multitude of ways, the most simple being a preset time and/or date being reached. No external stimulus is necessitated by this step, but it is likewise not excluded.

The fourth step S400 of determining if there is sufficient privacy in an information recall situation may be, in this embodiment, as simple as scheduled location information being used to determine whether or not the user is expected to be at home, thus not necessitating externally gathered information. The sufficiency of privacy of the information recall situation may optionally also be determined in this step S400 using information gathered in an environment of the information recall situation.

The fifth step S500 of communicating the target user information or the at least one associated context feature, depending on the sufficiency of privacy determined in the previous step, may be executed in a plurality of ways. It is notable that context features and target user information may be represented in multiple types of information (i.e. visual, auditory, olfactory, and tactile) and thus the communication thereof may optionally include multiple of these types of stimuli.

The ultimate result of the embodiment shown in Fig. 1 is a highly flexible computer implemented method for target information recall assistance that may be used to significant effect by a vast plurality of modern computer devices, ranging from a user's smartphone to a robot to a whole constellation of devices like a smart home.

### <Second Embodiment>

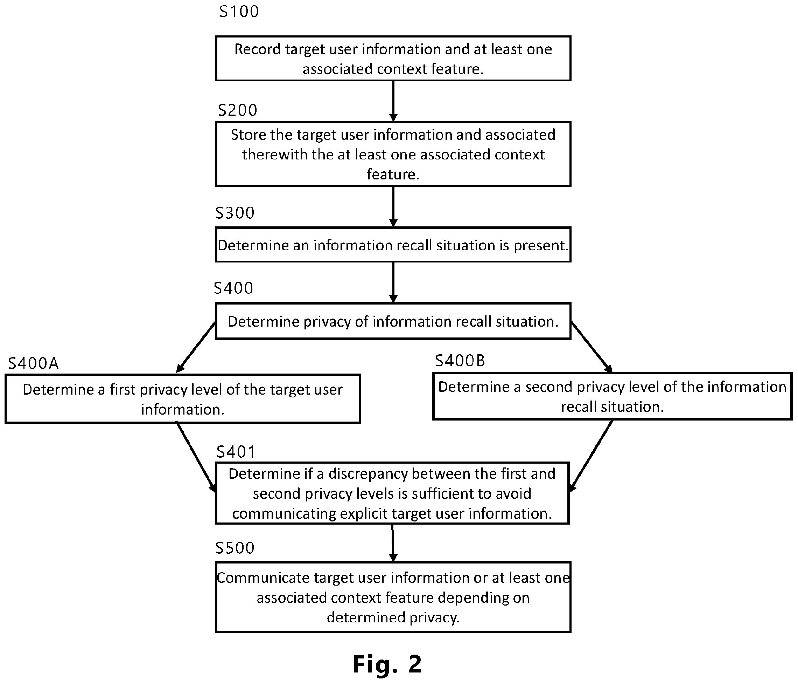

The embodiment shown in Fig. 2 recites the steps S100, S200, and S300 identically to the embodiment of Fig. 1. Step S400, which in the previous embodiment broadly determined whether or not the information recall situation is sufficiently private, is further elaborated on in the present embodiment. In step S400, a further two determinations in steps S400A and S400B are made so as to further specify the methodology of privacy sufficiency.

Step S400A relates to a first privacy level of the target user information, which, according to the hereinabove definition of privacy level in this context, involves an estimation based on a number of factors such as sensitivity and/or predetermined confidentiality and/or detected signifiers of confidentiality. The sensitivity in particular may be determined based on an umbrella classification of the target user information, such as "doctor's appointments"; it may be determined based on keywords, such as "medication" or "financial"; and/or it may be determined based on direct user inputs or previous user behaviors regarding similar information.

Step S400B relates to a second privacy level of the information recall situation, which, according to the hereinabove definition of privacy level in this context, is a value that may be estimated for an environment using known tools such as voice or face recognition and environmental analysis of factors such as open doors, unfamiliar locations, or high noise levels. The second privacy level may also be, in some implementations, overridden by a user input if the user or another operator knows that a situation that would otherwise be determined to have an insufficient privacy level. This would be applicable, for example, if a new caretaker is introduced whose voice or face is not yet recognized, but who is nonetheless trusted with the care of the user.

After the execution of steps S400A and S400B, it is then determinable based on the previous estimations of the first and second privacy levels if there exists a discrepancy that represents a high enough disclosure risk to warrant communication of the at least one context feature in place of the target user information. As discussed hereinabove, the determination of whether a discrepancy, and thus disclosure risk, is acceptable or not may be done via a simple preset formula for calculation, a continuously developing algorithm (i.e. machine learning), or another form of artificial intelligence.

Step S500 proceeds identically in the deterministic fashion of the previous embodiment of Fig. 1.

The ultimate result of this embodiment is a clear approach to privacy sufficiency determination that takes into account privacy factors of both the target user information and the information recall situation.

### <Third Embodiment>

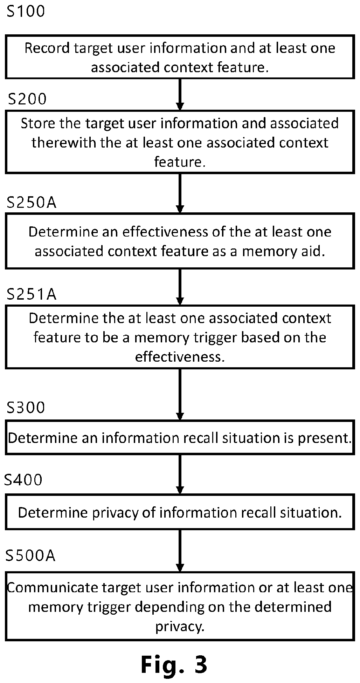

The embodiment shown in Fig. 3 recites the steps S100 and S200 identically to the embodiments shown in Figs. 1 and 2, deviating in that the new steps S250A and S251A are introduced. These steps relate to the idea of memory trigger selection and use.

After S200, the stored at least one context feature is analyzed as a memory aid in S250A. More specifically, the effectiveness of one of the at least one context feature is estimated using methods such as cognitive psychology or iterative machine learning. This is especially useful when multiple context features are present, and may optionally include the assignment of specific environmental conditions in which some context features may have the highest effectiveness. Information recall situations with difficult environments, for example loud rooms, may make an auditory context feature less ideal than a tactile or visual one, or situations in which a user is detected to be moving may not be ideal for tactile context features, etc.

Step S251A logically follows S250A, wherein at least one context feature is determined to have the role of a memory trigger. A memory trigger may be one or a combination of context features, which opens opportunities for plannable, multi-faceted approaches to memory recall assistance.

Steps S300 and S400 are shown to be performed as they would be in Fig. 1, although it is notable that the steps S400A, S400B, and S401 from Fig. 2 may be seamlessly added into an alternative execution of the present embodiment.

Step S500A is the culmination of the previous steps, specifically that the at least one context feature is replaced with the memory trigger which has been predetermined to be effective in memory recall assistance.

The added consideration of effectiveness results in this embodiment provides a foundational structure for iterative improvement of recall assistance. In combination with the steps S400A, S400B, and S401, the present embodiment can iteratively develop in both areas of disclosure risk assessment and memory recall assistance. There is a further optional action of communicating to the user that the memory trigger selected for an instance of target user information, which can serve to significantly strengthen a user's memory association with that chosen memory trigger.

### <Fourth Embodiment>

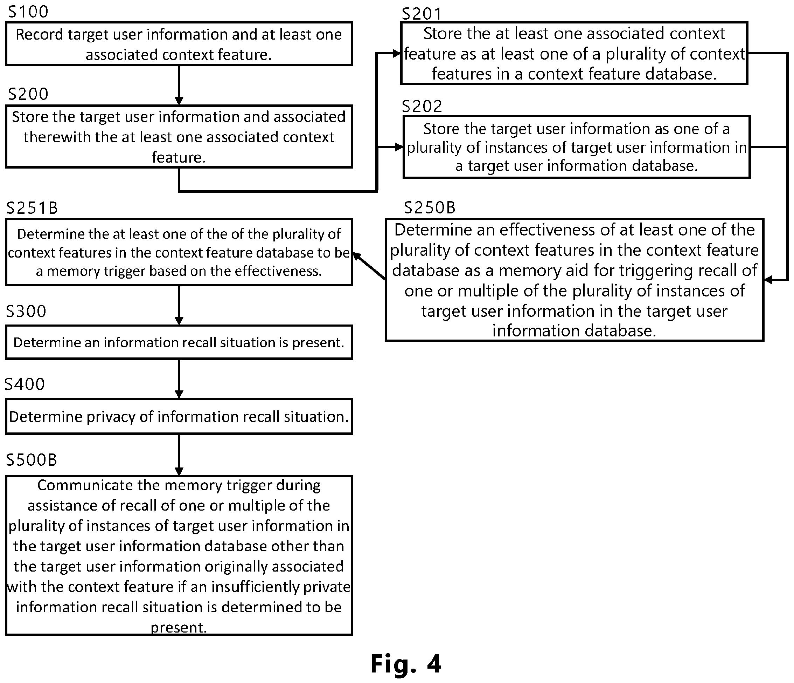

The embodiment shown in Fig. 4 recites the steps S100 and S200 of the previous embodiments and the related figures, but diverges in that it discloses the steps S201, S202, S250B, S251B, and S500B.

Starting with step S201, the at least one context featured stored in step S200 is additionally added to a context feature database comprised of a plurality of context features. The context feature database introduced therein may exist in the same storing means as the information stored in S200, but specifically it is populated with a plurality of context features that are not necessarily directly associated with the target user information that the aforementioned at least one context feature is originally associated with. The context feature database may optionally be pre-populated with context features that may commonly be associated with instances target user information. For example, the context feature database may include common facial expressions that could be shown on a screen avatar or a robot assistant, sounds of specific actions like opening a generic prescription pill bottle, or symbols that may be used for abstraction of activities or the construction of fictional stories.

Step S202, in a similar fashion to S201, the target user information stored in S200 is additionally added to a target user information database comprised of a plurality of instances of target user information. The target user information database introduced therein may exist in the same storing means as the information stored in S200.

Step S250B is a modification of step S250A from Fig. 3, wherein it is modified such that there is the additional aspect of context features found in the context feature database being considered for their effectiveness as memory aids for recall assistance for one or multiple instances of target user information in the target user information database other than those the context features are originally associated with (if they were associated with one originally at all).

Step S251B follows the same methodology of step S251A from Fig. 3, with the modification present in S250B applying accordingly. The result is memory triggers that are applicable beyond their original context, expanding the options available for memory recall assistance.

Steps S300 and S400 may proceed as in Fig. 1, or may be modified with the additions of S400A, S400B, and S401 from Fig. 2 as is possible with the third embodiment, yielding the same additional advantages.

Step S500B is a modification of S500A from the third embodiment and Fig. 3, wherein the memory trigger arrived at in step S251B is applied to one or multiple instances of target user information in their respective information recall situations when it is determined that the explicit target user information should not be communicated due to insufficient privacy.

This embodiment has the ultimate result of allowing for a robust set of memory triggers to be applied to applicable target user information when appropriate. Furthermore, the object of flexibility is served by allowing instances target user information without suitable context features immediately available for association to still have a possibility for memory triggers to be created. There is a further optional action of communicating to the user that the memory trigger selected for an instance of target user information, which can serve to significantly strengthen a user's memory association with that chosen memory trigger. This is especially relevant when the memory trigger is derived from the context feature database, since the user may not immediately recognize the connection unless the association is communicated to them.

### <General System Embodiment>

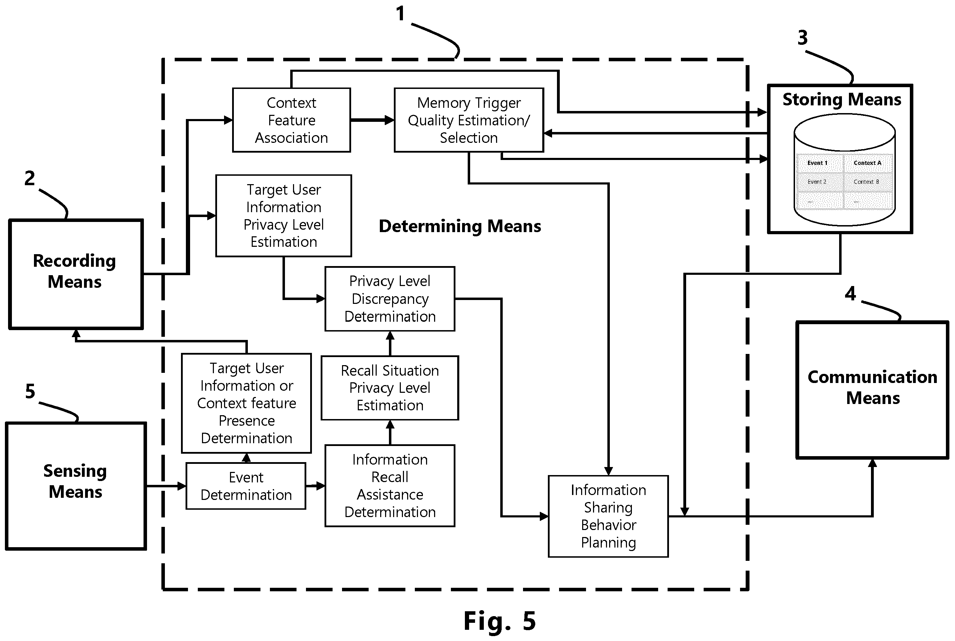

In an embodiment of a system for executing the computer implemented method for assisting a user in recalling target user information, Fig. 5 shows a generalized diagram wherein the software components of the determining means 1 are displayed in a glass-box fashion.

The aforementioned determining means 1 executes a plurality of steps, which may be performed by a single device or by a series of specialized devices such as processors in smart home devices, which may also act as sensing means 5, locally determining that event is happening, wherein a buffer may be present to prevent loss of potential target user information or context features, while a centralized processing device determines if an information recall situation is occurring or if relevant context information may be present. A recording means 2 may then be activated, wherein the recording means 2 may comprise a part or all of the sensing means 5, from which recorded information is analyzed for context feature association or target user information privacy level estimation which may, for example, be performed by an offsite computer connected in the cloud. The determining means 1 further determines the privacy level of the recall situation and which context feature from either the recording means 2 or from the storing means 3 is to be used as a memory trigger, which is then planned by the determining means 1 in terms of information sharing behavior; the information sharing behavior may include communicating via the communication means 4 the target user information, a context feature as a memory trigger, or which context feature will be used in the future as a memory trigger associated with at least one target user information.

The embodiment of Fig. 5 is intentionally flexible, as the computer-implemented method of Figs. 1 through 4 may be applied in a single device, such as a smartphone, or a device constellation with even further connection to the cloud.

Each of the following implementation scenarios is determined to further specify possibilities fulfilled by preferred embodiments of the present invention.

### <Implementation Scenario 1>

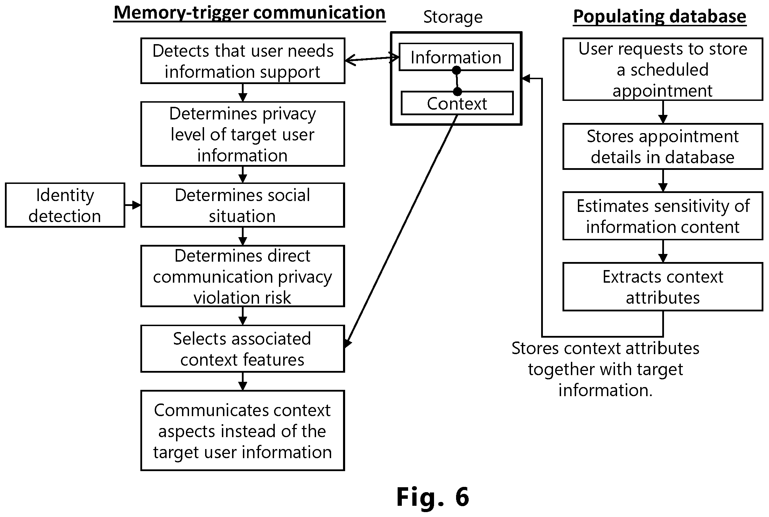

Fig. 6 provides a potential stepwise progression of the implementation below. Reference numerals are further provided referencing Figs. 1 to 4 for orientation within the generic stepwise progressions therein.

### In an initial situation:

A person is at the doctor's office to schedule a follow-up appointment for next month. She uses a smart wearable assistant device (smart glasses etc.) which is part of her connected personal assistant system. The system automatically recognizes the appointment S100 and stores the details S200 in the database (sound analysis). Additionally, it analyses the received information regarding its sensitivity. It considers a doctor's appointment as sensitive and thus of a high disclosure risk potential and determines that this target user information (the appointment and details) may result in a significant discrepancy between its own first privacy level and a privacy level of a potential information recall situation S400, S400A. It accesses the backlog (short term memory) to look for at least one context feature potentially usable as a memory trigger which could be associated to the information/event and then be stored together in association with the sensitive target user information S200. In the waiting room, the person was fixating an abstract modern painting hanging on the wall (detected by the "smart glasses"). A high rarity score of the fixated-on content and attention level score due to fixation time serve as indicator for a context feature that is effective as a memory trigger S250A, S251A. The system stores a snapshot of the painting as a memory trigger for the target user information.

### In an information recall situation:

A home robot is part of the user's connected personal assistant system, wherein the robot is listening to a conversation between two people. The robot determines that the two people are scheduling an appointment. The robot further determines that the planned appointment conflicts with a urologist appointment (target user information) of the robot owner. The robot predicts an urgency for intervention to prevent conflicting appointments from being scheduled, thus determining the situation to be an information recall situation S300. The robot estimates that explicit communication of the target user information might be too sensitive to disclose in the particular situation, which is insufficiently private S400. The robot selects a behavior which involves gazing towards the person and displaying the "painting" snapshot from the doctor's waiting room as a memory trigger S500A.

Displaying the snapshot of the painting does not communicate the explicit target information, as it does not give away the information about the doctor's appointment, but it has been determined to be sufficient to activate the user's memory to remember the appointment, and thus has a high likelihood of preventing the scheduling conflict.

### <Implementation Scenario 2>

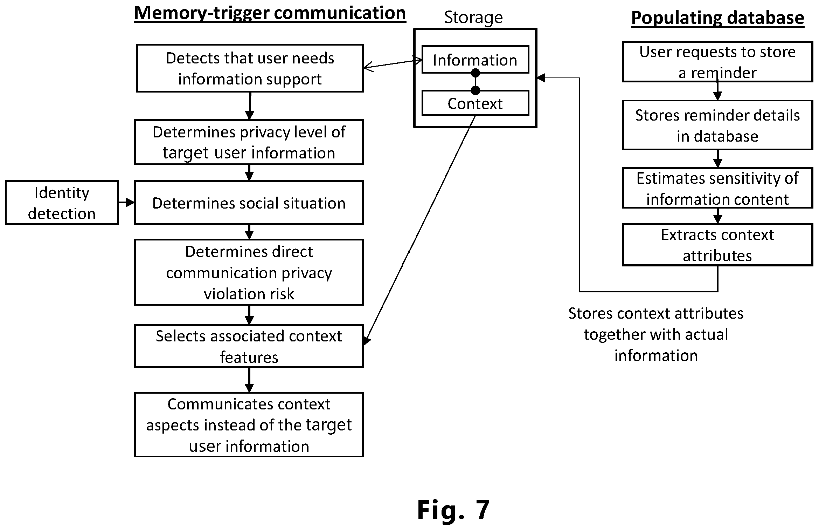

Fig. 7 provides a potential stepwise progression of the implementation below. Reference numerals are further provided referencing Figs. 1 to 4 for orientation within the generic stepwise progressions therein.

### In an initial situation:

A person living in smart-home has been requested by his doctor to take a new medication in form of pills once per day for the next several months. After taking it the first time, he asks its smart-home/-speaker system to remember and remind him every day to take his pills. The smart-home stores reminder in the database including reoccurring details S100, S200.

Additionally, it analyses the received information regarding its privacy level. The system considers the pills intake reminder as sensitive S400A. The system searches its backlog for context features that may act as memory triggers which can be stored together with the information. An audio recording of the pill intake event receives a high rarity / uniqueness scoring and is thus determined to be a potentially effective memory aid S250A. The system stores the "opening the pillbox" sound recording as an associated context feature S200 and further determines it to be a memory trigger S251A.

### In an information recall situation:

A smart-home / smart-speaker device has the purpose to remind its owner (older adult) to take his pills every day. On the weekend, a friend of his family is visiting. Usually, after breakfast, a time when it is predetermined that an information recall situation is present S300, a direct reminder communication is communicated via the speakers S500. The system detects the presence of an unknown person in the flat and estimates that publicly communicating "do not forget to take your heart pills" could be perceived as privacy violation S400, S400A, S400B. For the pill intake reminder task (target user information), it has stored an associated sound file which contains the "*blub*" sound of opening a pillbox S200, S251A. It uses the break between two songs played by a smart-home radio to replay the stored sound "opening the pillbox" via its speakers, hence replaying a stored sound to communicate the memory trigger instead of the target user information S500A.

### <Implementation Scenario 3>

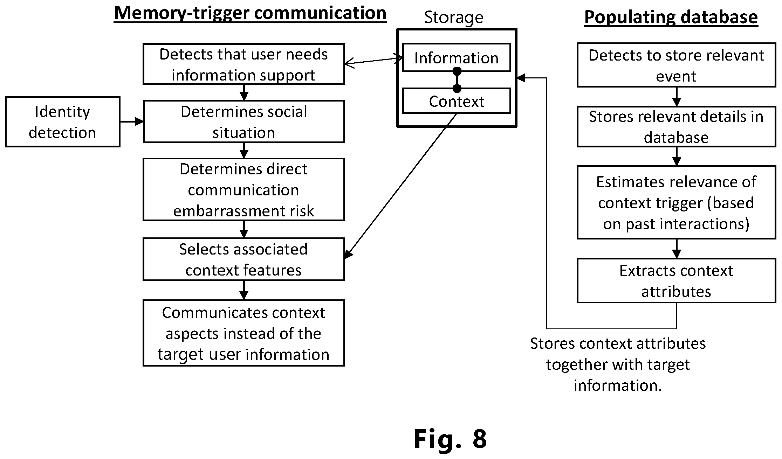

Fig. 8 provides a potential stepwise progression of the implementation below. Reference numerals are further provided referencing Figs. 1 to 4 for orientation within the generic stepwise progressions therein.

### In an initial situation:

A user of a smart wearable assistant device is introduced to a new person. The device is part of a life-logging system. The system detects the "introduction of a new person" situation, interprets it as a memorable event (based on a sound analysis), and records the name of the new person as target user information S100 and stores it S200. The system searches the backlog and sensory input for at least one context feature which could be associated with the targeted information and then be stored together with it S200. In the introduction situation, a specific song is played in the background. The high specificity score of the background sound is an indicator for a high effectiveness as a potential memory aid S250A. The system stores the song recording S200, determines it to be a memory trigger S251A, and labels accordingly in association with the target user information (the name) in its storage.

### In an information recall situation:

The user of the smart wearable assistant device is participating in a social activity. The system detects that the person cannot remember the name of one of the attendees (because the user does not address him/her by name), thus determining this to be an information recall situation S300. The system can identify the "unknown" person based on a voice recognition system. Providing name and context of first meeting explicitly (via speech output) is determined to be possible embarrassment in this non-private situation S400, S400A, S400B (drawing attention of the second person to the fact that the user did not remember the name on their own). For the introduction situation, it has already stored S200 the associated sound file which contains the specific song and prepared it as a memory trigger. It simulates an incoming call and uses the song as ring tone to assist in recall of the name S500A.

Such an approach might be sufficient to trigger the name and the context of meeting from the memory of the user, without the second user noticing.

### <Implementation Scenario 4>

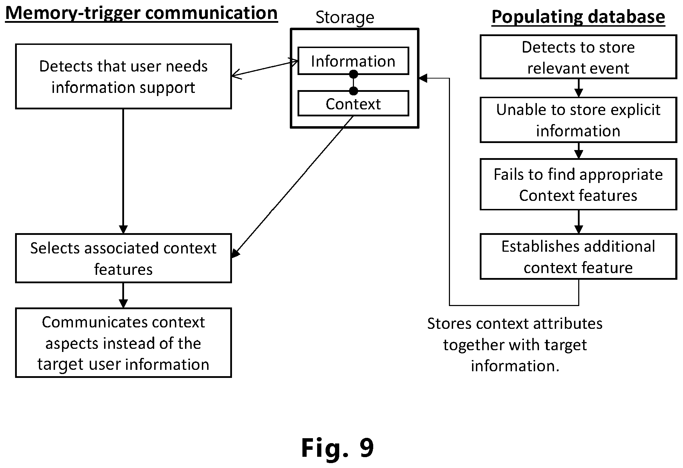

Fig. 9 provides a potential stepwise progression of the implementation below. Reference numerals are further provided referencing Figs. 1 to 4 for orientation within the generic stepwise progressions therein.

### In an initial situation:

A user of a robotic companion device purchases a new combination lock for her bike. When the user initially sets the lock's combination, the robot detects this as an event involving relevant information (the combination), records some information of the lock S100 (the information cannot be determined by the robot to contain or not contain the final combination), and stores it S200 so it may be recognized in possible information recall situations later. As the robot does not perceive the information about the combination explicitly, it searches for context features in the current situation which could be used as a memory trigger for the user later on. As the robot does not find context features with high chance of assisting in memory recall assistance (having performed steps S250A unsuccessfully), it determines that it must instead determine effectiveness of features from its internal database as memory aids and associate those with the target user information 250B, thus it recommends the user to use a story to memorize the combination and provides on its display images of elephants, monkeys and bananas (selected from an internal database wherein the images were stored previously in instances of steps S201 and S202) as a suggestion for story components, wherein the user's story acts as a fictionally created memory trigger and the three images associated with it are determined to be a memory trigger by the robot S251B.

### In an information recall situation:

A user of a robotic companion device attempts to unlock a combination lock for her bike. When the user takes longer than usual, the robot detects a potential need for a reminder of the correct combination S300. Because the robot only has information that may be sensitive (the information that could not be determined to be the lock combination), thus determining in step S400 that the recall situation is insufficiently private to risk showing what may be the explicit target user information. It drives to the user and shows the images (which it previously determined to be memory triggers for the target user information) of elephants, monkeys and banana on its display S500B. The user has an association of the images with the story that she was using to memorize the combination, recalls the correct numbers, and can open the lock.

All steps which are performed by the various embodiments and implementations described in the present disclosure as well as the functionalities described to be performed by the various entities are intended to mean that the respective entity is adapted to or configured to perform the respective steps and functionalities of the herein described method and associated system.

In the claims as well as in the description the word "comprising" does not exclude the presence of other elements or steps.

The indefinite article "a" or "an" does not exclude a plurality. A single element or other unit may fulfill the functions of several entities or items recited in the claims. The mere fact that different dependent claims recite certain measures and features of the method does not exclude that a combination of these measures and features cannot combined in an advantageous implementation.

## Claims

1. A computer implemented method for assisting a user in recalling target user information, the method comprising:
recording target user information and at least one associated context feature, and
storing the target user information and associated therewith the at least one associated context feature,
wherein, when recall of the target user information is required in an information recall situation, the target user information or the at least one associated context feature is communicated, depending on whether the information recall situation is or is not sufficiently private for explicit communication of the target user information.

2. The method according to claim 1, wherein:
the at least one associated context feature comprises at least one of the following:
a gesture, gaze, or facial expression which has been determined to be relevant to the information recall situation and/or the target user information;
information on a person or object which the user has been determined to pay attention to during the information recall situation; and
a story related to the target user information.

3. The method of claim 1 or 2, further comprising:
recording one of the at least one associated context feature from an initial situation corresponding to the time at which the target user information is recorded.

4. The method according to any one of claims 1 to 3, further comprising:
determining a first privacy level of the target user information based on a classification type of the target user information, and
determining a second privacy level of the information recall situation, wherein a discrepancy between the first privacy level and the second privacy level is used to determine whether the information recall situation is or is not sufficiently private, and thus whether the target user information or the at least one associated context feature is communicated.

5. The method of any one of claims 1 through 4, further comprising:
determining an effectiveness of the at least one associated context feature as a memory aid for triggering recall of target user information by the user.

6. The method of claim 5, further comprising:
determining one of the at least one associated context feature to be a memory trigger based on the effectiveness, wherein
the memory trigger is communicated during assistance of recall of the target user information if an insufficiently private information recall situation is determined to be present.

7. The method according to claim 4, further comprising:
storing the at least one associated context feature as at least one of a plurality of context features in a context feature database, and
storing the target user information as one of a plurality of instances of target user information in a target user information database.

8. The method of claim 7, further comprising:
determining an effectiveness of at least one of the plurality of context features in the context feature database as a memory aid for triggering recall of one or multiple of the plurality of instances of target user information in the target user information database, and
determining the at least one of the of the plurality of context features in the context feature database to be a memory trigger based on the effectiveness, wherein
the memory trigger is communicated during assistance of recall of one or multiple of the plurality of instances of target user information in the target user information database other than the target user information originally associated with the context feature if an insufficiently private information recall situation is determined to be present.

9. The method of claim 6 or 8, further comprising:
communicating to the user that the memory trigger has been associated with the target user information and will be communicated if an insufficiently private information recall situation is determined to be present.

10. A system for facilitating assisting a user in recalling target user information, the system comprising:
a determining means for decision-making regarding target user information, associated context features, and situations relevant thereto;
a recording means for recording target user information and associated context features;
a storing means for storing target user information and associated context features, and
a communication means for communicating with the user; wherein
the recording means records target user information and at least one associated context feature, and
the target user information and the at least one associated context feature are stored via the storing means, wherein the at least one associated context feature is associated with the target user information; and
when a situation is determined by the determining means to be an information recall situation wherein recall of the target user information is required,
the determining means determines whether the information recall situation is or is not sufficiently private for explicit communication of the target user information, and
the communication means communicates the target user information or the at least one associated context feature to the user.

11. The system of claim 10, further comprising:
a sensing means for detecting stimuli regarding target user information, associated context features, and situations relevant thereto, wherein
the determining means determines a first privacy level of the target user information based on a classification type of the target user information, and determines a second privacy level of the information recall situation based on environmental factors sensed by the sensing means, wherein
a discrepancy between the first privacy level and the second privacy level is used by the determining means to determine whether the information recall situation is or is not sufficiently private, and thus whether the target user information or the at least one associated context feature is communicated by the communicating means.
